# EUROPÄISCHE PATENTSCHRIFT

(11) **EP 0 503 539 B1**
(45) Veröffentlichungstag und Bekanntmachung des Hinweises auf die Patenterteilung: **26.10.1994**
(21) Anmeldenummer: 92104009.3
(22) Anmeldetag: 09.03.1992
(51) Int. Cl.: B23K 26/16

(54) **Verfahren zur Werkstückbearbeitung mit einem Laser**
Method for the processing of a work piece with a laser
Procédé pour le traitement d'une pièce à usiner au moyen du laser

(30) Priorität: 15.03.1991 DE 4108541
(43) Veröffentlichungstag der Anmeldung: 16.09.1992
(73) Patentinhaber: Linde Aktiengesellschaft, 65189 Wiesbaden (DE)
(72) Erfinder: Herrmann, Johann, W-8044 Unterschleissheim (DE)
(74) Vertreter: Schaefer, Gerhard, Dr.

(56) Entgegenhaltungen:
- DE-A- 3 824 048
- DE-A- 3 904 969
- GB-A- 2 163 692
- US-A- 4 724 297

## Beschreibung

Die Erfindung betrifft ein Verfahren zur Werkstückbearbeitung, insbesondere zur Obenflächenbearbeitung, mit einem auf das Werkstück fokussierten Laserstrahl und einem zusätzlichen, auf den Brennpunkt des Laserstrahls gerichteten Gasstrahl, wobei Material des Werkstücks vom Werkstück durch den fokussierten Laserstrahl unter Zuhilfenahme des gerichteten Gasstrahls abgetragen wird.

Bei der Bearbeitung von Werkstücken ersetzen vielfach optische Verfahren unter Einsatz von Lasern rein mechanische Bearbeitungsverfahren. Es wird angestrebt, auch bei der Oberflächenbearbeitung von Werkstücken, z.B. anstelle des mechanischen Senkerodierens oder Fräsens, Verfahren einzusetzen, die Material vom Werkstück durch einen auf die Werkstückoberfläche fokussierten Laserstrahl unter Zuhilfenahme eines auf den Brennpunkt des Laserstrahls gerichteten Gasstrahles abtragen. Durch den fokussierten Laserstrahl verdampft das Material auf der Werkstückoberfläche. Durch den Gasstrahl wird das verdampfte Material entfernt. Eine derartige Bearbeitung weist eine hohe Präzision und Wiederholbarkeit auf. Allerdings besteht beim beschriebenen Verfahren das Problem, daß das abgedampfte Material wieder kondensiert und sich auf der Werkstückoberfläche erneut anlagert. Dadurch ist die gewünschte Qualität bei der Bearbeitung nicht sichergestellt. Außerdem wirkt sich das auf dem Werkstück erneut angelagerte Material bei einer weiteren Werkstückbearbeitung nachteilig aus, da die zu bearbeitende Werkstückoberfläche Unregelmäßigkeiten aufweist, die in einem gesonderten Arbeitsgang entfernt werden müssen.

Aus der US-A-4 724 297 ist ein Verfahren zum Schneiden metallischer Werkstücke mit einem auf das Werkstück fokussierten Laserstrahl und einem zusätzlichen, auf den Brennpunkt des Laserstrahls gerichteten Gasstrahl bekannt, wobei Material des Werkstückes vom Werkstück durch den fokussierten Laserstrahl unter Zuhilfenahme des Gasstrahls abgetragen wird.

Aus der DE-A1-3 904 969 ist ein Verfahren zur Beseitigung von Staubpartikeln von Festkörperoberflächen in gasförmiger Umgebung durch elektromagnetische Strahlungspulse im optischen Bereich, beispielsweise die eines Lasers, bekannt, wobei die Staubpartikeln
1. durch Aufheizen von der Festkörperoberfläche abgelöst,
2. durch Photoemission aus den Staubpartikeln, durch Anlagerung von Photoelektronen aus dem Festkörpersubstrat, durch Thermoemission aus Staubpartikeln oder er durch Aufladung mittels Kontaktablösung aufgeladen und
3. durch die Wirkung einer elektrostatischen Kraft aus der Nähe der Oberfläche des Festkörpersubstrats entfernt werden.

Die Staubpartikeln werden ohne Verdampfen der Staubpartikeln oder des Materials der Oberfläche des Festkörpersubstrats beseitigt. Die Laserstrahlung wird dabei nicht fokussiert, sondern flächig auf die Oberfläche gelenkt. Zur Unterstützung der Reinigung der Oberfläche von Staubpartikeln kann ein partikelfreies Gas eingesetzt werden.

Der Erfindung liegt daher die Aufgabe zugrunde, ein Verfahren der eingangs genannten Art aufzuzeigen, welches die genannten Nachteile auf einfache Art und Weise vermeidet und verhindert, daß das abgedampfte Material wieder kondensiert und sich auf der Werkstückoberfläche erneut anlagert.

Diese Aufgabe wird erfindungsgemäß dadurch gelöst, daß das zu bearbeitende Werkstück elektrostatisch aufgeladen wird.

Durch das erfindungsgemäße elektrostatische Aufladen des zu bearbeitenden Werkstückes erhält auch das abgedampfte Material eine gleichpolige elektrostatische Ladung. Aufgrund dieser Ladung wirkt auf das abgedampfte Material eine elektrostatische abstoßende Kraft gegenüber dem Werkstück, die eine erneute Anlagerung der Verfestigung des abgedampften Materials am bearbeiteten Werkstück verhindert. Damit wird eine wesentliche Qualitätserhöhung der Materialbearbeitung mit Lasern bei gleichzeitiger Steigerung der Materialabtragsrate erzielt. Dies gilt insbesondere für Oberflächenbearbeitungen bei nur teilweiser Bearbeitung der Oberfläche, wie etwa bei beim Gravieren oder Beschriften.

Erfindungsgemäß kann der Gasstrahl inerte Gase wie He, Ar, N₂ oder Gemischen hieraus oder durch reaktive Gase wie O₂, CO₂, Gemischen hieraus oder CO₂- und/oder O₂-haltigen Gasgemischen zusammengesetzt sein. Vorteilhaft wirkt sich im erfindungsgemäßen Verfahren eine Gaszusammensetzung von inertem und reaktivem Gas aus. Das reaktive Gas unterstützt dabei das Abtragen der Materials vom Werkstück.

In Weiterbildung des Erfindungsgedankens wird im erfindungsgemäßen Verfahren zusätzlich zur elektrostatischen Aufladung des Werkstückes ein elektrostatisches Feld im Raum zwischen der Werkstückoberfläche und der Düse, durch die Laserstrahl und Gasstrahl gegen das Werkstück geführt werden, erzeugt. Dazu wird ein Körper gegenpolig zum Werkstück elektrostatisch aufgeladen. Damit wirkt zusätzlich zur bereits beschriebenen Abstoßung auf das verdampfte Material eine anziehende Kraft durch den entgegengesetzt geladenen Körper. Das abgedampfte Material lagert sich folglich nicht wieder auf der Werkstückoberfläche, sondern am gegenpolig geladenen Körper an. Als geladener Körper kann der Düsenkopf selbst oder mit besonderem Vorteil eine Elektrode eingesetzt werden, die sich zwischen Werkstückoberfläche und Düse befindet. Eine zusätzliche Elektrode bringt den entscheidenden Vorteil, daß Materialanlagerungen des abgedampften Materials an ihr unproblematisch sind und daß die Elektrode leicht ausgetauscht werden kann. Es erfolgt also eine Werkstückbearbeitung mit einem Materialabtrag in die gewünschte Richtung, d.h. hin zur Elektrode und weg von der bearbeiteten Werkstückoberfläche.

Mit Vorteil für das erfindungsgemäße Verfahren wird als Elektrode eine Ringelektrode benützt, die rotationssymetrisch zur Laserstrahlachse bzw. zur Strömungsrichtung des Gasstrahles angeordnet wird, so daß Laserstrahl und Gasstrahl durch die Ringöffnung der Elektrode geführt werden. Die Ringelektrode kann dabei als Torrus oder als Lochscheibe ausgebildet sein.

Das erfindungsgemäße Verfahren eignet sich für die Bearbeitung jedes Materiales, das elektrostatisch aufladbar ist. Beispielhaft hierzu werden Metalle, Halbleiter, Kunststoffe und Gummi genannt. Vorzugsweise wird dabei das zu bearbeitende Werkstück positiv aufgeladen.

In weiterer Ausgestaltung der Erfindung wird die Düse mit der gleichen Polung wie das zu bearbeitende Werkstück elektrostatisch aufgeladen. Dadurch wird eine Anlagerung des abgedampften Materials an der Düse verhindert. Die gleichpolige elektrostatische Aufladung der Düse wirkt sich besonders vorteilhaft aus, wenn eine gegenpolig elektrostatisch geladene Elektrode zwischen Düse und Werkstück benutzt wird. Damit wird sichergestellt,daß sich kein Material im Düsenkanal anlagert oder gar die Fokussierlinse erreichen kann.

Die Erfindung sei im folgenden an Hand zweier Ausführungsbeispiele näher erläutert.

Hierbei zeigen:
- Figur 1: Die erfindungsgemäße Werkstückbearbeitung mit elektrostatischer Aufladung des Werkstückes und
- Figur 2: die erfindungsgemäße Werkstückbearbeitung mit elektrostatischer Aufladung des Werkstückes und gegenpolig elektrostatischer geladener Ringelektrode.

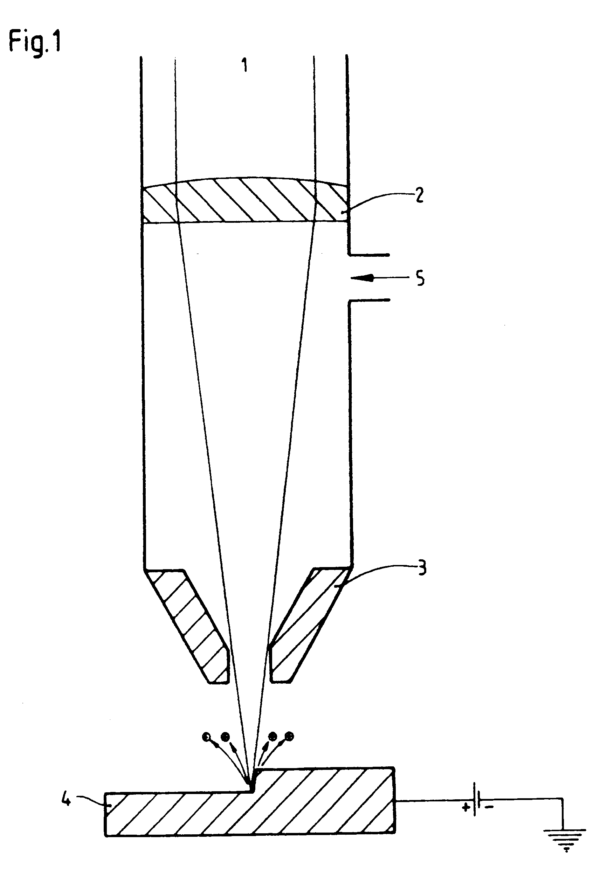

In Figur 1 ist ein Schema der erfindungsgemäßen Werkstückbearbeitung mit einem Laser dargestellt. In einem Düsenkopf werden der parallel einfallende Laserstrahl 1 durch eine Fokussierlinse 2 gebündelt. Der fokussierte Laserstrahl wird durch die Düse 3 auf das Werkstück 4 geleitet, wobei der Brennpunkt des fokussierten Laserstrahls auf der Werkstückoberfläche des zu bearbeitenden Werkstückes liegt. Über eine seitliche Gaszuleitung 5 wird inertes und/oder reaktives Gas in den Düsenkopf gepumpt. In der Düse 3 wird ein scharfer Gasstrahl gebildet, der gegen die Bearbeitungsstelle des Werkstückes geführt wird. Das wurde erfindungsgemäß elektrostatisch, im Ausführungsbeispiel positiv, aufgeladen. Das abgetragene, ebenfalls positiv geladene Material wird vom Werkstück abgestoßen, so daß eine Werkstückbearbeitung hoher Qualität ermöglicht wird.

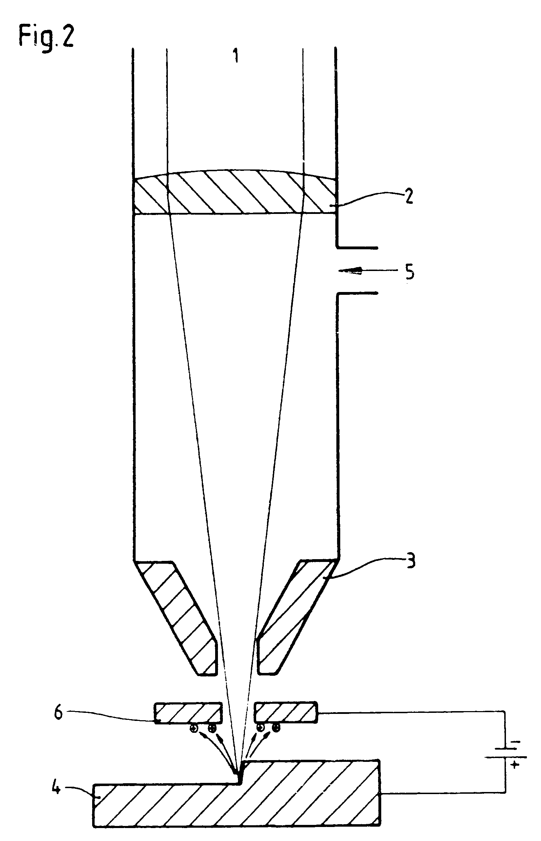

Figur 2 zeigt ebenfalls ein Schema der erfindungsgemäßen Werkstückbearbeitung mit einem Laser, das im wesentlichem mit dem aus Figur 1 übereinstimmt. Die Bezugsziffern 1 bis 5 sind daher identisch übernommen. Im Unterschied zum in Figur 1 dargestellten Verfahren wird jedoch zusätzlich eine Ringelektrode 6 in Form einer Lochscheibe eingesetzt. Während das Werkstück wie in Figur 1 auf positivem Potential liegt, ist die Ringelektrode 6 in Figur 2 elektrostatisch negativ aufgeladen. Abgedampftes positiv geladenes Material wird von der Ringelektrode folglich angezogen und sammelt sich daher auf der Ringelektrode an.

## Patentansprüche

1. Verfahren zur Werkstückbearbeitung, insbesondere zur Oberflächenbearbeitung, mit einem auf das Werkstück (4) fokussierten Laserstrahl (1) und einem zusätzlichen, auf den Brennpunkt des Laserstrahls (1) gerichteten Gasstrahl (5), wobei Material des Werkstücks vom Werkstück (4) durch den fokussierten Laserstrahl (1) unter Zuhilfenahme des gerichteten Gasstrahls (5) abgetragen wird, **dadurch gekennzeichnet**, daß das zu bearbeitende Werkstück (4) elektrostatisch aufgeladen wird.

2. Verfahren nach Anspruch 1, dadurch gekennzeichnet, daß der Gasstrahl (5) aus inertem Gas wie He, Ar, N₂ oder Gemischen daraus gebildet wird.

3. Verfahren nach Anspruch 1, dadurch gekennzeichnet, daß der Gasstrahl (5) aus reaktivem Gas wie O₂, CO₂, Gemischen daraus oder aus einem CO₂- und/oder O₂-haltigen Gasgemisch gebildet wird.

4. Verfahren nach einem der Ansprüche 2 oder 3, dadurch gekennzeichnet, daß der Gasstrahl (5) aus einer Mischung aus inertem und reaktivem Gas gebildet wird.

5. Verfahren nach einem der Ansprüche 1 bis 4, dadurch gekennzeichnet, daß im Raum zwischen der Werkstückoberfläche (4) und der Düse (3), durch die der Laserstrahl (1) und der Gasstrahl (5) gegen das Werkstück (4) geführt werden, zumindest im Raumbereich über der Werkstückoberfläche ein elektrostatisches Feld angelegt wird.

6. Verfahren nach Anspruch 5, dadurch gekennzeichnet, daß das elektrostatische Feld durch ein gegenpolig zum zu bearbeitenden Werkstück (4) geladenen Körper (6) erzeugt wird, der sich zwischen Werkstückoberfläche (4) und Düse (3) befindet.

7. Verfahren nach Anspruch 6, dadurch gekennzeichnet, daß zur Erzeugung des elektrostatischen Feldes eine Ringelektrode (6) zwischen Düse (3) und Werkstück (4) eingeführt wird, durch die der Laserstrahl (1) und der Gasstrahl (5) hindurchgeleitet werden.

8. Verfahren nach einem der Ansprüche 1 bis 7, dadurch gekennzeichnet, daß das Werkstück (4) elektrostatisch positiv aufgeladen wird.

9. Verfahren nach einem der Ansprüche 1 bis 8, dadurch gekennzeichnet, daß die Düse (3) mit gleicher Polung wie das zu bearbeitende Werkstück (4) elektrostatisch aufgeladen wird.

## Claims

1. Method for workpiece machining, in particular for surface machining, with a laser beam (1) focused on the workpiece (4) and an additional gas jet (5) aimed at the focal point of the laser beam (1), in which material of the workpiece is removed from the workpiece (4) by the focused laser beam (1) with the aid of the aimed gas jet (5), characterized in that the workpiece (4) to be machined is charged electrostatically.

2. Method according to claim 1, characterized in that the gas jet (5) is formed of inert gas such as He, Ar, N₂ or mixtures thereof.

3. Method according to claim 1, characterized in that the gas jet (5) is formed of reactive gas such as O₂, CO₂, mixtures thereof or of a gas mixture containing CO₂ and/or O₂.

4. Method according to one of claims 2 or 3, characterised in that the gas jet (5) is formed of a mixture of inert and reactive gas.

5. Method according to one of claims 1 to 4, characterised in that an electrostatic field is applied in the space between the workpiece surface (4) and the nozzle (3) through which the laser beam (1) and the gas jet (5) are aimed at the workpiece (4), at least in the area of the space above the surface of the workpiece.

6. Method according to claim 5, characterised in that the electrostatic field is generated by a body (6) charged with the opposite polarity to the workpiece (4) to be machined and which is located between the workpiece surface (4) and the nozzle (3).

7. Method according to claim 6, characterised in that an annular electrode (6) is introduced between the nozzle (3) and the workpiece (4) to produce the electrostatic field and through which the laser beam (1) and the gas jet (5) are passed.

8. Method according to one of claims 1 to 7, characterised in that the workpiece (4) is electrostatically positively charged.

9. Method according to one of claims 1 to 8, characterised in that the nozzle (3) is charged electrostatically with the same polarity as the workpiece (4) to be machined.

## Revendications

1. Procédé d'usinage de pièces, en particulier pour l'usinage de surfaces, à l'aide d'un rayon laser (1) focalisé sur la pièce (4) et d'un jet de gaz supplémentaire (5) dirigé sur le foyer du rayon laser (1), dans lequel le matériau de la pièce est éliminé de la pièce par le rayon laser (1) avec l'assistance du jet de gaz dirigé (5), caractérisé en ce que la pièce à usiner (4) est chargée électrostatiquement.

2. Procédé selon la revendication 1, caractérisé en ce que le jet de gaz (5) est constitué de gaz inerte tels que He, Ar, N2, ou leurs mélanges.

3. Procédé selon la revendication 1, caractérisé en ce que le jet de gaz (5) est constitué de gaz réactif tel que O₂, CO₂, de leurs mélanges ou d'un mélange de gaz contenant du CO₂ et/ou O₂.

4. Procédé selon la revendication 2 ou 3, caractérisé en ce que le jet de gaz (5) est constitué d'un mélange de gaz inerte et de gaz réactif.

5. Procédé selon l'une des revendications 1 à 4, caractérisé en ce que dans l'espace entre la surface de la pièce (4) et la buse (3), par le rayon laser (1) et les jets de gaz (5) guidés contre la pièce (4), on établit au moins dans la zone spatiale située au-dessus de la surface de la pièce un champ électrostatique.

6. Procédé selon la revendication 5, caractérisé en ce que le champ électrostatique est créé par un corps (6) chargé à contrepolarité par rapport à la pièce (4) à usiner et qui se trouve entre la surface de la pièce (4) et la buse (3).

7. Procédé selon la revendication 6, caractérisé en ce qu'on utilise pour la création du champ électrostatique une électrode annulaire (6) entre la buse (3) et la pièce (4) qui est traversée par le rayon laser (1) et le jet de gaz (5).

8. Procédé selon l'une des revendications 1 à 7, caractérisé en ce que la pièce (4) est chargée électrostatiquement de façon positive.

9. Procédé selon l'une des revendications 1 à 8, caractérisé en ce que la buse (3) est chargée électrostatiquement avec la même polarité que la pièce à usiner (4).
